# EUROPÄISCHE PATENTANMELDUNG

(11) **EP 2 759 396 A1**
(43) Veröffentlichungstag der Anmeldung: **30.07.2014**
(21) Anmeldenummer: 14165683.5
(22) Anmeldetag: 18.11.2011
(51) Int. Cl.: B30B 1/42, B65B 9/04, B65B 31/02, B65B 51/14, B29C 65/18, B29C 65/30, B29C 65/74, B29C 65/00, B65B 7/16

(54) **Arbeitsstation für eine Verpackungsmaschine**

(30) Priorität: 16.12.2010 DE 102010054773
(62) Teilanmeldung aus: 11009157.6
(71) Anmelder: Multivac Sepp Haggenmüller GmbH & Co. KG, 87787 Wolfertschwenden (DE)
(72) Erfinder: Capriotti, Luciano, 87730 Bad Grönenbach (DE); Ehrmann, Elmar, 87730 Bad Grönenbach (DE)
(74) Vertreter: Grünecker, Kinkeldey, Stockmair & Schwanhäusser

(57) **Zusammenfassung**

Die Erfindung bezieht sich auf eine Arbeitsstation (2) für eine Verpackungsmaschine (1), wobei die Arbeitsstation (2) eine Werkzeugstruktur (3) und ein mittels eines Antriebs (10) relativ zu dieser Werkzeugstruktur (3) bewegbares Werkzeug (7) aufweist. Dieser Antrieb (10) umfasst mindestens einen mit einem Elektromagneten (20) in Wirkverbindung bringbaren und relativ zu dem Elektromagneten (20) bewegbaren Gegenmagneten (22). Die Erfindung zeichnet sich aus durch eine Mechanik (11), mittels derer die Bewegung des Werkzeugs (7) gleichgerichtet gekoppelt ist an die Relativbewegung des Gegenmagnaten (22) relativ zum Elektromagneten (20).

## Beschreibung

Die Erfindung bezieht sich auf eine Arbeitsstation für eine Verpackungsmaschine gemäß dem Oberbegriff des Anspruchs 1.

Eine solche Arbeitsstation, die dort sogar die gesamte Verpackungsmaschine bildet, geht aus der DE 27 26 875 A1 hervor. Die dort beschriebe Verpackungsmaschine dient zum Versiegeln von Kunststoffbeuteln, wobei gleichzeitig noch ein Tragegriff in die Kunststoffbeutel geschnitten wird. Sobald ein Kunststoffbeutel in einen Einführschlitz der Maschine geschoben wird, betätigt er einen Mikroschalter, der daraufhin einen Elektromagneten aktiviert. Der Elektromagnet zieht einen in seinem Inneren gelagerten Kolben an, der sich relativ zum Elektromagneten bewegt. Diese Bewegung wird in mechanisch relativ aufwändiger Weise umgelenkt und übertragen auf eine Bewegung des Siegel- und Schneidwerkzeugs.

Aus einem technisch fremden Gebiet, nämlich dem der Pressen, ist die US 6 192 733 B1 bekannt, die einen elektromagnetischen Werkzeugantrieb offenbart.

Aufgabe der vorliegenden Erfindung ist es, eine Arbeitstation für eine Verpackungsmaschine mit konstruktiv möglichst einfachen Mitteln in ihrem Betriebsablauf zu verbessern.

Diese Aufgabe wird gelöst durch eine Arbeitsstation mit den Merkmalen des Anspruchs 1. Vorteilhafte Weiterbildungen der Erfindung sind in den Unteransprüchen angegeben.

In der erfindungsgemäßen Arbeitsstation ist eine Mechanik vorgesehen, mittels derer die Bewegung des Werkzeugs gleichgerichtet und vorzugsweise direkt gekoppelt ist an die Relativbewegung des Gegenmagneten relativ zum Elektromagneten. Mit einer direkten Kopplung ist dabei gemeint, dass die Bewegung des beweglichen Magneten direkt auf eine Bewegung des Werkzeugs übertragen wird, ohne dass also noch eine Übersetzung oder Richtungsänderung der Bewegung erfolgt. Durch eine solche gleichgerichtete und vorzugsweise auch direkte Kopplung wird die zur Kopplung verwendete Mechanik erheblich weniger komplex als im Stand der Technik. Dadurch wiederum beansprucht der Antrieb für das Werkzeug einen kleineren Bauraum, und wegen der verringerten Komplexität ist der Antrieb deutlich weniger störanfällig.

Die erfindungsgemäße Arbeitsstation kann für alle denkbaren Typen von Verpackungsmaschinen eingesetzt werden, bei denen ein bewegliches Werkzeug verwendet wird. Beispielsweise kann es sich bei der Arbeitsstation um eine Siegel- oder Schneidstation in einer Tiefziehverpackungsmaschine, Schalenverschließmaschine ("Traysealer"), Beutelverschließmaschine, Kammermaschine oder Kammerbandmaschine handeln, aber auch um eine Schneidstation oder um eine Formstation in einer Tiefziehverpackungsmaschine. Je nach Funktion der Arbeitsstation handelt es sich bei dem beweglichen Werkzeug beispielsweise um ein (Tiefzieh-) Formwerkzeug, ein Siegelwerkzeug oder ein Schneidwerkzeug.

Vorzugsweise definiert der Elektromagnet eine Axialrichtung, bezüglich derer der Elektromagnet und/oder das von ihm erzeugte Magnet axialsymmetrisch ist. Besonders günstig ist es, wenn der Elektromagnet und der Gegenmagnet in dieser Axialrichtung durch einen Spalt veränderlicher Breite voreinander beabstandet sind. Dabei ist zu berücksichtigen, dass die magnetischen Anziehungskräfte (oder Abstoßungskräfte) in guter Näherung umgekehrt proportional sind zur dritten Potenz dieser Spaltbreite, d.h. die magnetischen Kräfte sind proportional zu 1/d³. Das axiale Beabstanden von Elektromagnet und Gegenmagnet führt nun im Gegensatz zu einem herkömmlichen, den Elektromagneten mittig durchdringenden Anker zu Anziehungskräften, die sich mit der dritten Potenz des Abstands vergrößern, wenn sich der Abstand zwischen dem Elektromagneten und dem Gegenmagneten verringert. Durch diesen Effekt kann der erfindungsgemäße Antrieb vor allem in der letzten Phase der Bewegung des beweglichen Magneten extrem hohe Kräfte erzielen. Diese Kräfte wiederum können genutzt werden, um sehr hohe Schneid- und/oder Siegelkräfte auf das Werkstück, d.h. eine Verpackungsfolie oder eine zu erzeugende Verpackung, zu erzielen.

Besonders günstig ist es, wenn der Gegenmagnet ein Flachmagnet ist, d.h. ein Magnet, der in der Axialrichtung des Antriebs eine geringere Ausdehnung hat als in der Radialrichtung. Diese Form ermöglicht es dem Gegenmagneten beispielsweise, mit einer großen Fläche des Elektromagneten zusammenzuwirken. Zudem sorgt der Flachmagnet in der Axialrichtung des Antriebs für eine geringe Baugröße. Denkbar wäre es z. B., dass der Elektromagnet und der Gegenmagnet in Axialrichtung des Elektromagneten etwa die gleiche Ausdehnung haben, mit einem Unterschied von maximal 10%.

Der Elektromagnet kann bei der erfindungsgemäßen Arbeitsstation entweder mit der Werkzeugstruktur oder mit dem Werkzeug gekoppelt sein. Die Stromversorgung des Elektromagneten wird jedoch einfacher, wenn er mit der festen Werkzeugstruktur gekoppelt ist, während der Gegenmagnet den beweglichen Magneten des Antriebs bildet.

Bei diesem Gegenmagneten handelt es sich bevorzugt entweder um einen zweiten Elektromagneten oder um einen Permanentmagneten. Der Permanentmagnet hat dabei den Vorteil, dass er nicht mit Strom versorgt werden muss, sodass das Antriebssystem noch weniger komplex wird.

Denkbar wäre es auch, dass der Gegenmagnet kein Permanentmagnet ist, sondern lediglich ein magnetisierbares Material aufweist. Dies hat für einige Anwendungsfälle den Vorteil, dass in der Arbeitsstation nicht dauerhaft ein Magnetfeld vorliegt, sondern nur bei Aktivierung des Elektromagneten und daraufhin erfolgter Magnetisierung des Gegenmagneten.

In einer vorteilhaften Ausführungsvariante der Erfindung ist ein Andockmagnet zum Andocken des relativ zur Werkzeugstruktur beweglichen Magneten in dessen Ruhestellung vorgesehen. Diese Ruhestellung nimmt der Gegenmagnet vorzugsweise dann ein, wenn der Elektromagnet inaktiv ist. Der Andockmagnet sorgt in der Ruhestellung für eine definierte Position des beweglichen Magneten. So wird z. B. verhindert, dass sich der bewegliche Magnet frei in der Arbeitsstation bewegen kann, wenn zu Wartungs- oder Reinigungszwecken der Elektromagnet abgeschaltet wird.

In einem einfachen Fall kann es sich bei dem Andockmagneten um eine Edelstahlplatte handeln. Eine solche Edelstahlplatte kann ohnehin in der Werkzeugstruktur vorgesehen sein. Um die Magnetkraft der Edelstahlplatte zu erhöhen, kann es sich insbesondere um eine ferritische Edelstahlplatte handeln, d.h. um einen gezielt ferritisch (d.h. mit Eisenatomen) stärken dotierten Edelstahl. Beispielsweise kann der Eisenanteil gegenüber üblichem Edelstahl um 5 bis 20% erhöht sein. Alternativ könnte es sich bei dem Andockmagneten beispielsweise auch um einen Elektromagneten handeln.

Zweckmäßig ist es, wenn der Andockmagnet und/oder der relativ zur Werkzeugstruktur bewegliche Magnet eine mit einem Dämpfungsmaterial versehene Oberfläche aufweist. Das Dämpfungsmaterial sorgt für eine sanfte Anlage des beweglichen Magneten an den Andockmagneten. Dadurch sorgt es für ein schonendes Aufsetzen des beweglichen Magneten auf den Andockmagneten und verhindert auf diese Weise sowohl eine Beschädigung eines der beiden Magneten, als auch eine übermäßige Geräuschentwicklung. Bei dem Dämpfungsmaterial kann es sich beispielsweise um Gummi, um Silikon oder um einen elastischen, beispielsweise polymeren Kunststoff handeln.

In einer Variante der Erfindung ist mindestens eine Feder zum Vorspannen des Werkzeugs vorgesehen. Diese Vorspannung kann sowohl in die Arbeitsstellung, als auch in die Ruhestellung des Werkzeugs gerichtet sein. Besonders günstig ist dabei, wenn die Federkraft zur Ruhestellung des Werkzeugs gerichtet ist. Denn üblicherweise handelt es sich dabei um eine geöffnete Stellung des beweglichen Werkzeugs, in der bei einem Stromausfall oder bei einem Abschalten des Elektromagneten beispielsweise das Werkzeug gewechselt oder Verpackungsmaterial aus der Arbeitsstation entnommen werden kann.

Wenn eine Führung für das Werkzeug vorgesehen ist, kann dessen Bewegung noch ruhiger und definierter ablaufen. Zudem kann die Führung beispielsweise Querkräfte aufnehmen, die auf das Werkzeug einwirken.

Die Werkzeugstruktur kann beispielsweise so ausgebildet sein, dass mit ihr eine luftdicht um das Werkzeug geschlossene Kammer gebildet werden kann. Auf diese Weise kann die Arbeitsstation zum Evakuieren und/oder Begasen der herzustellenden Verpackungen eingesetzt werden.

Besondere Vorteile ergeben sich, wenn der Elektromagnet gepulst bestrombar ist, d.h. wenn eine Steuereinrichtung vorgesehen ist, die für ein solches, gepulstes Bestromen des Elektromagneten sorgt. Denn dies ermöglicht eine Feineinstellung der vom Elektromagneten erzeugten Anziehungs- oder Abstoßungskräfte. Das gepulste Bestromen kann dabei sowohl gleichpolig erfolgen, d.h. zwischen null und einem Maximalwert des Stroms, als auch gegenpolig, d.h. zwischen einem negativen und einem positiven Maximalwert des Stroms.

Besonders günstig ist es, wenn die Frequenz der gepulsten Bestromung des Elektromagneten einstellbar ist. Auf diese Weise kann die vom Elektromagneten auf den Gegenmagneten erzeugte Kraft in mehreren Stufen oder sogar stufenlos eingestellt werden. Einander benachbarte Intervalle der gepulsten Bestromung müssten dabei nicht notwendiger Weise gleich lang sein. Dadurch lassen sich beliebige Bewegungskurven oder besser Geschwindigkeitskurven des beweglichen Magneten erzielen.

Denkbar ist es beispielsweise, dass der Elektromagnet bei Annäherung des beweglichen Magneten an den Andockmagneten mit einer vorbestimmten Folge von Strompulsen mit sich ändernder Pulsfrequenz bestrombar ist. Diese vorbestimmte Folge von Strompulsen kann so gewählt sein, dass sich der bewegliche Magnet zwar schnell, aber dennoch sanft an den Andockmagneten anlegt.

Die Erfindung bezieht sich auch auf eine Verpackungsmaschine mit einer Arbeitsstation in einer der vorstehend beschriebenen Varianten. Wie erläutert, kann es sich bei der Verpackungsmaschine beispielsweise um eine Tiefziehmaschine, um eine Schalenverschließmaschine, um eine Beutelverschließmaschine oder um eine Kammermaschine handeln.

Im Folgenden wird ein vorteilhaftes Ausführungsbeispiel der Erfindung anhand einer Zeichnung näher erläutert.

Im Einzelnen zeigen:
- Figur 1: einen schematischen Vertikalschnitt durch eine erfindungsgemäße Arbeitsstation und
- Figur 2: eine schematische Darstellung eines Ausführungsbeispiels des Antriebs in einer erfindungsgemäßen Arbeitsstation.

Gleiche Komponenten sind in den Figuren durchgängig mit gleichen Bezugszeichen versehen.

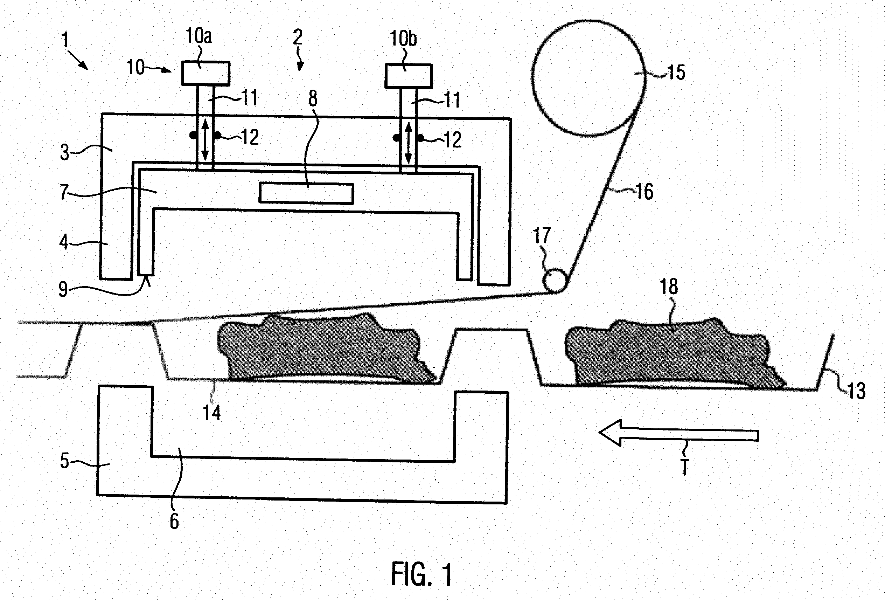

Figur 1 zeigt schematisch einen Vertikalschnitt durch einen Ausschnitt einer Verpackungsmaschine 1, nämlich einer Arbeitsstation 2 dieser Verpackungsmaschine 1. Im vorliegenden Fall handelt es sich bei der Arbeitsstation 2 um eine Siegelstation 2 der Verpackungsmaschine 1.

Die Arbeits- bzw. Siegelstation 2 weist eine Werkzeugstruktur 3 auf. Diese Werkzeugstruktur 3 umfasst ein Kammeroberteil 4 und ein Kammerunterteil 5. Die beiden in Figur 1 in einer geöffneten Position dargestellten Kammerteile 4, 5 können aufeinander zubewegt werden, um gemeinsam eine luftdicht geschlossene Siegelkammer 6 zu bilden.

Im Inneren der Werkzeugstruktur 3, im vorliegenden Ausführungsbeispiel innerhalb des Kammeroberteils 4, ist ein Werkzeug 7 vorgesehen, das relativ zur Werkzeugstruktur 3 bewegbar ist. Im vorliegenden Ausführungsbeispiel handelt es sich beim Werkzeug 7 um ein Siegelwerkzeug 7. Das Siegelwerkzeug 7 dient zum Versiegeln zweier Verpackungsfolien miteinander unter Ausübung einer Siegeltemperatur und gegebenenfalls eines zusätzlichen Siegeldrucks auf die beiden Verpackungsfolien 13, 16. Zu diesem Zweck verfügt das Siegelwerkzeug 7 über ein oder mehrere Heizelemente 8 sowie über einen Siegelrand 9, an dem das Siegelwerkzeug 7 mit den zu versiegelnden Verpackungsfolien in Kontakt treten kann. Die Heizelemente 8 sorgen für eine Erwärmung des Siegelrands 9 auf die gewünschte Siegeltemperatur.

Ein Antrieb 10 sorgt für eine Bewegung des Siegelwerkzeugs 7 relativ zur Werkzeugstruktur 3. Im vorliegenden Ausführungsbeispiel umfasst der Antrieb 10 einen ersten Antrieb 10a und einen damit synchronisierten, zweiten Antrieb 10b. Jeder dieser beiden Antriebe 10a, 10b ist außerhalb der Siegelkammer 6 an der Werkzeugstruktur 3 vorgesehen und mittels einer Transfermechanik, im vorliegenden Fall einer einfachen Übertragungsstange 11, mit dem Siegelwerkzeug 7 verbunden. In der Werkzeugstruktur 3 ist die Übertragungsstange 11 in einer passenden Aussparung geführt. Mittels einer Dichtung 12 ist die Übertragungsstange 11 gegenüber der Werkzeugstruktur 3 abgedichtet.

Das Kammerunterteil 5 der Werkzeugstruktur 3 ist so geformt, dass es eine aus einer ersten Verpackungsfolie 13 tiefgezogene Verpackungsmulde 14 aufnehmen kann. Von einer Rolle 15, die außerhalb der Werkzeugstruktur 3 an der Arbeitsstation 2 gelagert ist, wird eine zweite Verpackungsfolie 16 abgezogen, die auch als Oberfolie 16 bezeichnet wird. Die erste Verpackungsfolie bzw. Unterfolie 13 und die zweite Verpackungsfolie 16 sind miteinander versiegelbar; es kann sich jeweils um siegelbare Kunststoffe handeln. Die zweite Verpackungsfolie 16 wird über eine Umlenkrolle 17 geführt, um etwa parallel zur ersten Verpackungsfolie 13 in die Arbeitsstation 2 zu gelangen.

Im Betrieb der Verpackungsmaschine 1 werden in einer (nicht dargestellten) Formstation die Verpackungsmulden 14 in die Unterfolie 13 tiefgezogen. In einer Einfüllstation werden anschließend Produkte 18 in die Verpackungsmulden 14 eingefüllt, bevor die befüllten Verpackungsmulden 14 in Transportrichtung T in die Siegelstation 2 transportiert werden. Gleichzeitig wird auch die zweite Verpackungsfolie 16 so in die Siegelstation 2 geführt, dass sie oberhalb der Verpackungsmulden 14 liegt.

Im nächsten Schritt werden die beiden Kammerteile 4, 5 aufeinander zu bewegt, um gemeinsam eine luftdicht geschlossene Siegelkammer 6 zu bilden. Bei dieser Bewegung bewegt sich das Siegelwerkzeug 7 nicht relativ zur Werkzeugstruktur 3, d.h. nicht relativ zum Kammeroberteil 4.

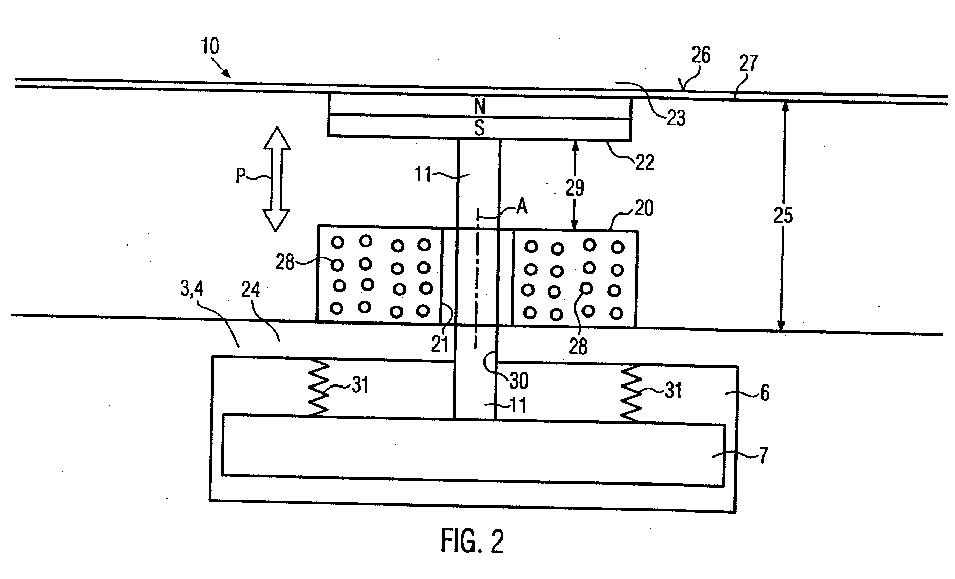

Sobald die Siegelkammer 6 luftdicht geschlossen ist, kann die mit dem Produkt 18 befüllte Verpackungsmulde 14 evakuiert und/oder mit einem Austauschgas oder Austauschgasgemisch begast werden. Sobald dieser Vorgang abgeschlossen ist, bewegt sich das Siegelwerkzeug 7 relativ zur Werkzeugstruktur 3 nach unten. Diese Bewegung wird erzeugt durch den Antrieb 10, der anhand von Figur 2 noch genauer erläutert werden wird. Die Bewegung des Siegelwerkzeugs 7 erzeugt einen Siegeldruck auf die Oberfolie 16. Gleichzeitig wird an den Siegelrändern 9 des Siegelwerkzeugs 7 die Oberfolie auf ihre Siegeltemperatur erhitzt, um an die Unterfolie 13 angesiegelt zu werden.

Optional kann sich in der Siegelstation 2 zwischen dem Kammeroberteil 4 und dem Siegelwerkzeug 7 noch ein Schneidwerkzeug befinden, das mittels eines eigenen Antriebs 10 relativ zur Werkzeugstruktur 3 bewegbar ist. Dieser Antrieb 10 kann genauso aufgebaut sein wie der Antrieb 10 des Siegelwerkzeugs 7. Das Schneidwerkzeug ist dann unabhängig vom Siegelwerkzeug 7 bewegbar.

Nach dem Öffnen der Siegelkammer 6 werden die versiegelten Verpackungen in Transportrichtung T aus der Siegelstation 2 heraustransportiert. Das Restfoliengitter der Oberfolie 16 kann gegebenenfalls auf einem (nicht gezeigten) Restfolienaufwickler gesammelt werden.

Figur 2 zeigt in schematischer Darstellung den in einer erfindungsgemäßen Arbeitsstation 2 verwendeten Antrieb 10 für das bewegbare Werkzeug 7.

Schematisch ist in Figur 2 das Siegelwerkzeug 7 dargestellt, das sich in der Siegelkammer 6 relativ zur Werkzeugstruktur 3, insbesondere relativ zum Kammeroberteil 4, in der durch den Doppelpfeil P angegeben Vertikalrichtung bewegen kann. Außerhalb der Siegelkammer 6, insbesondere am oder im Kammeroberteil 4, ist zu diesem Zweck ein Antrieb 10 für das bewegliche Werkzeug 7 vorgesehen. Dieser Antrieb 10 umfasst einen Elektromagneten 20. Dieser Elektromagnet 20 definiert durch seine Form eine zentrale Achse A, bezüglich derer der Elektromagnet axialsymmetrisch ist. Quer zur Axialrichtung A kann der Elektromagnet 20 beispielsweise einen kreisrunden oder quadratischen Querschnitt haben.

Entlang der zentralen Achse A befindet sich im Elektromagneten 20 eine Durchgangsbohrung 21. Diese Durchgangsbohrung 21 wird von der Übertragungsstange 11 durchdrungen. Ein unteres Ende der Übertragungsstange 11 ist fest mit dem beweglichen Werkzeug 7 gekoppelt. Das gegenüberliegende, obere Ende der Übertragungsstange 11 ist mit einem Gegenmagneten 22 gekoppelt. Im vorliegenden Ausführungsbeispiel handelt es sich beim Gegenmagneten 22 um einen als Flachmagnet ausgebildeten Permanentmagneten. "Flachmagnet" bedeutet dabei, dass die Ausdehnung des Gegenmagneten 22 transversal zur Axialrichtung A größer ist als in der Axialrichtung A. In Figur 2 ist mit N der Nordpol, mit S der Südpol des Gegenmagneten 22 bezeichnet. Der Südpol weist zum Elektromagneten 20. Die Form und Fläche des Gegenmagneten 22 transversal zur Axialrichtung A können annähernd oder sogar exakt identisch sein zur Fläche des Elektromagneten 22 transversal zur Axialrichtung A.

Oberhalb des Gegenmagneten 22 ist ein Andockmagnet 23 vorgesehen. Beim Andockmagneten 23 handelt es sich im vorliegenden Ausführungsbeispiel um eine Platte aus einem magnetischen oder magnetisierbaren Material, beispielsweise ferritisch stärker dotiertem Edelstahl, die ihrerseits Teil der festen Werkzeugstruktur 3 ist. Zwischen der als Andockmagnet 23 verwendeten Edelstahlplatte und einer Horizontalwand 24 der Werkzeugstruktur 3, auf oder in der der Elektromagnet 20 vorgesehen ist, befindet sich ein Luftspalt 25, innerhalb dessen der Gegenmagnet 22 in Richtung P beweglich ist.

Mittels der Transfermechanik 11, die im vorliegenden Ausführungsbeispiel als Übertragungsstange ausgebildet ist, ist die Bewegung des Gegenmagneten 22 direkt (d.h. ohne Übersetzung) und gleichgerichtet gekoppelt an die Bewegung des beweglichen Werkzeugs 7. Wenn also der Gegenmagnet 22 eine Bewegung in Richtung P ausführt, führt das bewegliche Werkzeug 7 ebenfalls eine Bewegung mit derselben Amplitude und derselben Richtung P aus.

In der in Figur 2 dargestellten Position befindet sich der Gegenmagnet 22 in seiner Ruhestellung, in der er am Andockmagneten 23 angedockt ist. Die zum Gegenmagneten 22 weisende Oberfläche 26 des Andockmagneten 23 ist mit einem Dämpfungsmaterial 27 versehen, beispielsweise Gummi oder einem elastischen Kunststoff. Dieses Dämpfungsmaterial 27 sorgt für eine sanfte und beschädigungsfreie Anlage des Gegenmagneten 22 am Andockmagneten 23. Das magnetische oder magnetisierbare Material des Andockmagneten 23 wechselwirkt mit dem Magnetfeld des Gegenmagneten 22, um diesen durch Magnetkräfte am Andockmagneten 23 zu halten.

Wenn das Siegelwerkzeug 7 abgesenkt werden soll, sorgt eine Steuerung (nicht dargestellt) dafür, dass ein Strom durch die Windungen 28 des Elektromagneten 20 fließt. Der Elektromagnet 20 entwickelt dabei ein eigenes Magnetfeld, das eine Anziehungskraft auf den Gegenmagneten 22 ausübt. Sobald diese Anziehungskraft die vom Andockmagneten 23 auf dem Gegenmagneten 22 ausgeübte Haltekraft übersteigt, bewegt sich der Gegenmagnet 22 nach unten auf den Elektromagneten 20 zu. Dabei verringert sich die Breite eines Spalts 29 zwischen den aufeinander zu weisenden Oberflächen des Elektromagneten 20 und des Gegenmagneten 22. Die Verringerung des Abstands zwischen den beiden Magneten 20, 22 erhöht auch bei gleichbleibender Stromstärke in den Windungen 28 die vom Elektromagneten 20 auf den Gegenmagneten 22 ausgeübten Anziehungskräfte. Dadurch wird der Gegenmagnet 22 weiter auf den Elektromagneten 20 zu beschleunigt. Diese Beschleunigung hält an, bis das über die Transfermechanik 11 mit dem Gegenmagneten 22 gekoppelte Werkzeug 7 auf ein Hindernis stößt, beispielsweise auf eine zu versiegelnde Folie. Durch die erfindungsgemäße Anordnung der Magnete 20, 22 im Antrieb 10 des Werkzeugs 7 ist gewährleistet, dass das Werkzeug 7 zu diesem Zeitpunkt den maximalen Druck nach unten ausüben kann. Dieser Druck kann beispielsweise zum Siegeln verwendet werden, oder - wenn es sich bei dem Werkzeug 7 um ein Schneidwerkzeug handelt - zum Schneiden von Verpackungsfolien.

Sobald der vom Werkzeug 7 auszuführende Arbeitsschritt vollzogen wurde, kann das Werkzeug 7 aus seiner Arbeitsstellung wieder in die in Figur 2 gezeigte Ruhestellung zurückgebracht werden. Zu diesem Zweck wird die Richtung des Stroms in den Windungen 28 des Elektromagneten 22 umgekehrt, um eine abstoßende Kraft auf den Gegenmagneten 22 zu erzeugen. Dieser bewegt sich folglich nach oben auf den Andockmagneten 23 zu.

Beim erfindungsgemäßen Antrieb ist es möglich, dass der Elektromagnet 20 gepulst bestrombar ist. Diese Bestromung kann nach dem Prinzip der Pulswellenmodulation (PWM) erfolgen, bei der die Frequenz und/oder die Dauer der einzelnen Strompulse einstellbar ist. Diese Einstellung wird durch eine zentrale Steuerung vorgenommen.

Die pulswellenmodulierte Bestromung des Elektromagneten 22 sorgt dafür, dass das Bewegungsprofil des Gegenmagneten 22 exakt gesteuert werden kann. Dadurch kann der Gegenmagnet 22 beispielsweise zunächst maximal nach oben beschleunigt werden, bevor er rechtzeitig vor Erreichen des Andockmagneten 23 wieder abgebremst wird. Dieses Abbremsen wird dadurch erzielt, dass mittels geeigneter Bestromung des Elektromagneten 22 eine Anziehungskraft an den Gegenmagneten 22 erzeugt wird. Diese Betriebsweise des Antriebs 10 sorgt für eine sanfte, beschädigungsfreie Anlage des Gegenmagneten 22 an den Andockmagneten 23.

In der Horizontalwand 24 der Werkzeugstruktur 3 befindet sich eine Öffnung, deren Form und Durchmesser an Form und Durchmesser der Übertragungsstange 11 angepasst sind, und die daher als Führung 30 für die Vertikalbewegung des Werkzeugs 7 dient. Zwischen der Werkzeugstruktur 3 und dem Werkzeug 7 sind zudem Zugfedern 31 vorgesehen, die möglichst symmetrisch bezüglich des Angriffspunkts der Transfermechanik 11 am Werkzeug 7 angeordnet sind. Diese Zugfedern 31 spannen das Werkzeug 7 in seine obere Ruhestellung vor. Dies hat den Vorteil, dass sich das Werkzeug 7 in seine Ruhestellung bewegt, wenn der Elektromagnet 20 beispielsweise bei einem Stromausfall oder Defekt stromlos werden sollte.

Ausgehend von dem dargestellten Ausführungsbeispiel können die erfindungsgemäße Arbeitsstation 2 bzw. der darin verwendete Antrieb 10 in vielfacher Weise verändert werden. Beispielsweise ist es denkbar, dass das bewegliche Werkzeug 7 nur einen einzigen Antrieb 10 aufweist (wie in Figur 2 dargestellt), oder aber mehrere Antriebe 10a, 10b (wie in Figur 1 dargestellt). Bereits erläutert wurde, dass es sich bei dem Werkzeug 7 z. B. um ein Siegelwerkzeug oder um ein Schneidwerkzeug in einer Siegelstation 2 handeln kann. Ebenso gut könnte es sich jedoch um ein Formwerkzeug handeln, das in einer Formstation zum Tiefziehen der Verpackungsfolie 13 verwendet wird.

Die Erfindung bezieht sich auch auf die folgenden Ausführungsbeispiele:

### Ausführungsbeispiel 1:

1. Arbeitsstation (2) für eine Verpackungsmaschine (1), wobei die Arbeitsstation (2) eine Werkzeugstruktur (3) und ein mittels eines Antriebs (10) relativ zu der Werkzeugstruktur (3) bewegbares Werkzeug (7) aufweist, wobei ferner der Antrieb (10) mindestens einen mit einem Elektromagneten (20) in Wirkverbindung bringbaren und relativ zu dem Elektromagneten (20) bewegbaren Gegenmagneten (22) aufweist, **dadurch gekennzeichnet,** dass eine Mechanik (11) vorgesehen ist, mittels derer die Bewegung des Werkzeugs (7) gleichgerichtet gekoppelt ist an die Relativbewegung des Gegenmagneten (22) relativ zum Elektromagneten (20).
2. Arbeitsstation nach Ausführungsbeispiel 1, **dadurch gekennzeichnet,** dass der Elektromagnet (20) eine Axialrichtung (A) definiert, und dass der Elektromagnet (20) und der Gegenmagnet (22) in dieser Axialrichtung (A) durch einen Spalt (29) veränderlicher Breite voneinander beabstandet sind.
3. Arbeitsstation nach Ausführungsbeispiel 2, **dadurch gekennzeichnet,** dass die magnetischen Kräfte zwischen dem Elektromagneten (20) und dem Gegenmagneten (22) größer werden, wenn sich die Breite des Spalts (29) zwischen dem Elektromagneten (20) und dem Gegenmagneten (22) verringert.
4. Arbeitsstation nach einem der vorangehenden Ausführungsbeispiele, **dadurch gekennzeichnet,** dass der Gegenmagnet (22) ein Flachmagnet ist.
5. Arbeitsstation nach einem der vorangehenden Ausführungsbeispiele, **dadurch gekennzeichnet,** dass Elektromagnet (20) mit der Werkzeugstruktur (3) oder mit dem Werkzeug (7) gekoppelt ist.
6. Arbeitsstation nach einem der vorangehenden Ausführungsbeispiele, **dadurch gekennzeichnet,** dass der Gegenmagnet (22) ein zweiter Elektromagnet oder ein Permanentmagnet ist.
7. Arbeitsstation nach einem der Ausführungsbeispiele 1 bis 5, **dadurch gekennzeichnet,** dass der Gegenmagnet (22) ein magnetisierbares Material aufweist.
8. Arbeitsstation nach einem der vorangehenden Ausführungsbeispiele, **dadurch gekennzeichnet,** dass ein Andockmagnet (23) zum Andocken des relativ zur Werkzeugstruktur (3) beweglichen Magneten (20, 22) in dessen Ruhestellung vorgesehen ist.
9. Arbeitsstation nach Ausführungsbeispiel 8, **dadurch gekennzeichnet,** dass der Andockmagnet (23) eine Edelstahlplatte ist.
10. Arbeitsstation nach einem der Ausführungsbeispiele 8 oder 9, **dadurch gekennzeichnet,** dass der Andockmagnet (23) und/oder der relativ zur Werkzeugstruktur (3) bewegliche Magnet (22) eine mit einem Dämpfungsmaterial (27) versehene Oberfläche (26) aufweist.
11. Arbeitsstation nach einem der vorangehenden Ausführungsbeispiele, **dadurch gekennzeichnet,** dass mindestens eine Feder (31) zum Vorspannen des Werkzeugs (7) vorgesehen ist.
12. Arbeitsstation nach einem der vorangehenden Ausführungsbeispiele, **dadurch gekennzeichnet,** dass eine Führung (30) für das Werkzeug (7) vorgesehen ist.
13. Arbeitsstation nach einem der vorangehenden Ausführungsbeispiele, **dadurch gekennzeichnet,** dass mittels der Werkzeugstruktur (3) eine luftdicht um das Werkzeug (7) geschlossene Kammer (6) gebildet werden kann.
14. Arbeitsstation nach einem der vorangehenden Ausführungsbeispiele, **dadurch gekennzeichnet,** dass der Elektromagnet (20) gepulst bestrombar ist.
15. Arbeitsstation nach Ausführungsbeispiel 14, **dadurch gekennzeichnet,** dass die Frequenz der gepulsten Bestromung des Elektromagneten (20) einstellbar ist.
16. Arbeitsstation nach einem der Ausführungsbeispiele 14 oder 15, **dadurch gekennzeichnet,** dass der Elektromagnet 20) bei Annäherung des beweglichen Magneten (22) an den Andockmagneten (23) mit einer vorbestimmten Folge von Strompulsen mit sich ändernder Pulsfrequenz bestrombar ist.
17. Verpackungsmaschine (1) mit einer Arbeitsstation (2) nach einem der vorangehenden Ausführungsbeispiele.

## Patentansprüche

1. Arbeitsstation (2) für eine Verpackungsmaschine (1), wobei die Arbeitsstation (2) eine Werkzeugstruktur (3) und ein mittels eines Antriebs (10) relativ zu der Werkzeugstruktur (3) bewegbares Werkzeug (7) aufweist, wobei ferner der Antrieb (10) mindestens einen mit einem Elektromagneten (20) in Wirkverbindung bringbaren und relativ zu dem Elektromagneten (20) bewegbaren Gegenmagneten (22) aufweist, wobei ferner eine Mechanik (11) vorgesehen ist, mittels derer die Bewegung des Werkzeugs (7) gleichgerichtet gekoppelt ist an die Relativbewegung des Gegenmagneten (22) relativ zum Elektromagneten (20),
**dadurch gekennzeichnet, dass** die Arbeitsstation (2) eine Schneidstation (2) für die Verpackungsmaschine (1) und das Werkzeug (7) ein Schneidwerkzeug (7) ist, oder dass die Arbeitsstation (2) eine Siegelstation (2) für die Verpackungsmaschine (1) und das Werkzeug (7) ein Siegelwerkzeug (7) oder ein Schneidwerkzeug (7) für das Siegeln oder Schneiden einer Verpackungsfolie (13, 16) ist.

2. Arbeitsstation nach einem der vorangehenden Ansprüche, **dadurch gekennzeichnet, dass** der Gegenmagnet (22) ein Flachmagnet ist.

3. Arbeitsstation nach einem der vorangehenden Ansprüche, **dadurch gekennzeichnet, dass** der Gegenmagnet (22) ein zweiter Elektromagnet ist oder ein magnetisierbares Material aufweist.

4. Arbeitsstation nach einem der vorangehenden Ansprüche, **dadurch gekennzeichnet, dass** ein Andockmagnet (23) zum Andocken des relativ zur Werkzeugstruktur (3) beweglichen Magneten (20, 22) in dessen Ruhestellung vorgesehen ist.

5. Arbeitsstation nach Anspruch 4, **dadurch gekennzeichnet, dass** der Andockmagnet (23) eine Edelstahlplatte ist.

6. Arbeitsstation nach einem der Ansprüche 4 oder 5, **dadurch gekennzeichnet, dass** der Andockmagnet (23) und/oder der relativ zur Werkzeugstruktur (3) bewegliche Magnet (22) eine mit einem Dämpfungsmaterial (27) versehene Oberfläche (26) aufweist.

7. Arbeitsstation nach einem der vorangehenden Ansprüche, **dadurch gekennzeichnet, dass** mindestens eine Feder (31) zum Vorspannen des Werkzeugs (7) vorgesehen ist.

8. Arbeitsstation nach einem der vorangehenden Ansprüche, **dadurch gekennzeichnet, dass** eine Führung (30) für das Werkzeug (7) vorgesehen ist.

9. Arbeitsstation nach einem der vorangehenden Ansprüche, **dadurch gekennzeichnet, dass** zwischen der Werkzeugstruktur (3) und dem Werkzeug (7) Zugfedern (31) vorgesehen sind, die symmetrisch bezüglich eines Angriffspunkts der Mechanik (11) am Werkzeug (7) angeordnet sind.

10. Arbeitsstation nach Anspruch 9,
**dadurch gekennzeichnet,**
**dass** die Zugfedern (31) das Werkzeug (7) in eine obere Ruhestellung vorspannen.

11. Arbeitsstation nach einem der vorangehenden Ansprüche, **dadurch gekennzeichnet, dass** entlang einer zentralen Achse (A) im Elektromagneten (20) eine Durchgangsbohrung (21) vorgesehen ist, die von der als Übertragungsstange (11) ausgebildeten Mechanik (11) durchdrungen wird, wobei ein unteres Ende der Übertragungsstange (11) fest mit dem beweglichen Werkzeug (7) und das gegenüberliegende, obere Ende der Übertragungsstange (11) mit dem Gegenmagneten (22) gekoppelt ist.

12. Arbeitsstation nach einem der vorangehenden Ansprüche, **dadurch gekennzeichnet, dass** der Elektromagnet (20) gepulst bestrombar ist.

13. Arbeitsstation nach Anspruch 12, **dadurch gekennzeichnet, dass** die Frequenz der gepulsten Bestromung des Elektromagneten (20) einstellbar ist.

14. Arbeitsstation nach einem der Ansprüche 12 oder 13, **dadurch gekennzeichnet, dass** der Elektromagnet 20) bei Annäherung des beweglichen Magneten (22) an den Andockmagneten (23) mit einer vorbestimmten Folge von Strompulsen mit sich ändernder Pulsfrequenz bestrombar ist.

15. Verpackungsmaschine (1) mit einer Arbeitsstation (2) nach einem der vorangehenden Ansprüche.
